# FASCICULE DE BREVET EUROPEEN

(11) **EP 0 849 130 B1**
(45) Date de publication et mention de la délivrance du brevet: **04.10.2001**
(21) Numéro de dépôt: 97403035.5
(22) Date de dépôt: 15.12.1997
(51) Int. Cl.: B60R 21/26

(54) **Générateur pyrotechnique de gaz à chargement composite**
Pyrotechnischer Gasgenerator mit Verbundladung
Pyrotechnic gas generator with composite loading

(30) Priorité: 18.12.1996 FR 9615575
(43) Date de publication de la demande: 24.06.1998
(73) Titulaire: S.n.c. Livbag, 91710 Vert Le Petit (FR)
(72) Inventeur: Perotto, Christian, 91610 Ballancourt (FR); Duvacquier, Daniel, 33300 Bordeaux (FR); Marsaud, Benoît, 27830 Neaufles Saint Martin (FR)
(74) Mandataire: Pech, Bernard

(56) Documents cités:
- EP-A- 0 570 347
- EP-A- 0 647 548
- DE-U- 29 617 587
- US-A- 3 871 684

## Description

La présente invention se rapporte au domaine des générateurs pyrotechniques de gaz. Plus précisément l'invention concerne un générateur pyrotechnique de gaz comportant un chargement solide de poudre composite du type "LOVA" utilisable notamment dans les dispositifs de protection par coussin gonflable.

Les générateurs pyrotechniques de gaz destinés à gonfler des coussins de protection doivent fournir en un temps très court, de l'ordre de quelques dizaines de millisecondes au plus, une quantité voulue de gaz sans présenter de risques d'explosion due à une augmentation intempestive de la pression à l'intérieur du générateur.

Les générateurs pyrotechniques traditionnels comportent généralement un chargement solide constitué soit par une poudre propulsive à base de nitrocellulose et de nitroglycérine encore appelée poudre à double base, soit par une poudre propulsive à base d'azoture de sodium.

Ces compositions propulsives présentent toutes les deux l'avantage d'être facilement inflammables et d'avoir des vitesses de combustion élevées. Les poudres à double base ayant par ailleurs une vitesse de combustion peu dépendante de la pression dans le domaine de fonctionnement de la sécurité automobile, il n'y a pas avec ces compositions de risque d'explosion du générateur lié à un emballement de la vitesse de combustion suite à une surpression à l'intérieur du générateur. Les compositions à base d'azoture de sodium ont des vitesses de combustion plus sensibles à la pression. Pour éviter les risques d'explosion du générateur avec ces compositions diverses mesures de sécurité ont été proposées. Il a ainsi été proposé par le brevet US-A-4,066,415 d'équiper le générateur d'une valve auxiliaire de sécurité qui s'ouvre lorsque la pression interne à la chambre de combustion dépasse une valeur prédéterminée, cette valve auxiliaire ne constituant pas l'orifice normal de sortie des gaz de combustion.

Il a été également été proposé par le brevet US-A-3,897,962 d'équiper l'orifice de sortie des gaz de combustion d'une tuyère comportant des lignes de préfragmentation de manière à permettre un élargissement de la section de sortie des gaz en cas de surpression interne au générateur.

Enfin, pour les générateurs à chambres de combustion multiples et successives, il a été proposé par le brevet EP-A-0 404 572 d'équiper le générateur de clapets anti-retour pour éviter la repressurisation d'une chambre par une autre.

Cependant les compositions traditionnelles à double base ou comportant de l'azoture de sodium présentent des inconvénients majeurs pour l'homme de métier. En effet les compositions à double base ont une stabilité dans le temps médiocre en raison des phénomènes de migration de la nitroglycérine qui sont difficiles à maîtriser et à contrôler. Par ailleurs les compositions à base d'azoture de sodium produisent des quantités importantes de résidus solides qui doivent être filtrés avant l'entrée des gaz dans le coussin gonflable.

Pour ces raisons l'homme de métier cherche depuis quelques années à abandonner ces compositions traditionnelles pour utiliser des compositions à base de poudres composites qui sont constituées principalement par un liant organique et par une charge énergétique et qui présentent le double avantage d'être chimiquement stables dans le temps et de ne pas produire de résidus solides lorsque la charge énergétique est bien choisie. De telles compositions sont encore connues sous l'appellation anglo-saxonne de poudres "LOVA" en raison de leur faible vulnérabilité aux agressions mécaniques ou thermiques.

L'emploi de chargements pyrotechniques composites pose cependant à l'homme de métier un double problème. D'un côté ces compositions ont des vitesses de combustion sensibles à la pression environnante et le générateur doit être équipé de dispositifs de sécurité contre les surpressions mais d'un autre côté ces compositions ont un allumage difficile et sont très sensibles à toute chute de pression au moment de l'allumage. Les mesures de sécurité évoquées plus haut qui reposent toutes sur l'emploi d'orifices de sortie des gaz calibrés dès le départ pour le fonctionnement normal en cours de combustion sont donc inapplicables avec ces nouveaux chargements car elles risquent d'entraîner leur extinction en début de fonctionnement.

Pour régler le problème de l'allumage de tels chargements il a été proposé par le brevet EP-A-0 570 347 qui forme l'état de la technique le plus proche un générateur dont l'orifice de sortie est équipé d'une valve pouvant se refermer en cas de chute de la pression interne lors de l'allumage de manière à éviter l'extinction du chargement. Cette solution est techniquement très délicate à régler pour être fiable dans les temps de fonctionnement de quelques millisecondes qui sont requis pour la sécurité automobile, elle est onéreuse et surtout elle ne règle absolument pas le problème des risques de surpression en cours de combustion une fois que l'allumage est réussi.

L'homme de métier qui cherche à utiliser des chargements pyrotechniques solides composites ne dispose donc pas, à l'heure actuelle, d'un générateur qui lui garantisse, dans les impératifs de temps exigés par la sécurité automobile, à la fois un bon allumage du chargement et l'absence de risques liés à des surpressions internes en cours de combustion du chargement

L'objet de la présente invention est précisément de proposer un tel générateur. L'invention concerne donc un générateur pyrotechnique de gaz destiné notamment à la sécurité automobile et comportant un corps creux muni d'une ouverture de sortie des gaz, un dispositif d'allumage et un chargement pyrotechnique de type "LOVA" constitué principalement par un liant organique et par une charge énergétique, la vitesse de combustion du dit chargement atteignant une valeur minimale prédéterminée lorsque la pression à laquelle il est soumis est supérieure à une valeur Po, caractérisé en ce que la dite ouverture de sortie des gaz est fermée par un dispositif d'évacuation des gaz comportant un élément traversé par un orifice cylindrique fermé par un opercule qui est rompu lorsque la pression intérieure Pc du générateur est supérieure à la dite pression Po, le diamètre initial du dit orifice cylindrique étant calculé pour que la chute instantanée de pression à l'intérieur du générateur lors de l'ouverture du dit opercule soit inférieure à la différence Pc-Po, le dit élément étant par ailleurs constitué par un matériau érodable sous l'action de l'écoulement des gaz de combustion du dit chargement.

Ainsi grâce à l'invention, l'allumage du chargement composite est assuré dans une enceinte fermée qui ne s'ouvre vers l'extérieur, par claquage de l'opercule, que lorsque la pression interne du générateur a dépassé la pression seuil Po qui assure une vitesse de combustion minimale prédéterminée. Par ailleurs le diamètre initial de l'orifice cylindrique de sortie des gaz est calculé pour qu'après ouverture de l'opercule la pression interne du générateur ne retombe pas en dessous de cette pression seuil. Le générateur selon l'invention évite ainsi les risques d'extinction du chargement à l'allumage. Ensuite, en cours de fonctionnement, les risques de surpression à l'intérieur du générateur sont supprimés par le fait que la section de l'orifice d'évacuation des gaz de combustion s'agrandit progressivement sous l'action érosive de ces derniers.

Selon un premier mode préféré de réalisation de l'invention le dit élément érodable a la forme d'une bague cylindrique présentant un orifice cylindrique central. Cette bague érodable sera préférentiellement encore constituée par une résine choisie dans le groupe constitué par les polyamides, les polyéthers et les polycarbonates. La dite résine pourra être chargée avec des fibres de verre ou des fibres de carbone.

Selon un second mode préféré de réalisation de l'invention le dit corps creux est constitué par un boîtier cylindrique dont une extrémité est constituée par une paroi sensiblement plane et dont l'autre extrémité est fermée par une bague de fermeture supportant le dispositif d'allumage. Avantageusement la dite bague de fermeture sera fixée par sertissage dans l'extrémité ouverte du dit boîtier. Avantageusement encore la dite ouverture de sortie des gaz est une ouverture cylindrique centrale portée par la paroi sensiblement plane. Dans une variante particulièrement préférée la dite ouverture cylindrique de sortie des gaz présente, de l'extérieur du générateur vers l'intérieur de ce dernier, une partie externe de grand diamètre, une partie médiane de petit diamètre et une partie interne de diamètre moyen dans laquelle est disposée la bague cylindrique dont l'orifice cylindrique central doit avoir un diamètre initial inférieur à celui de la partie médiane de l'ouverture de sortie des gaz. Dans cette réalisation le dispositif d'évacuation des gaz est simplement constitué par l'ouverture de géométrie particulière, par la bague érodable et par l'opercule décrit un peu plus loin. Cette bague sera en général collée à l'intérieur de la partie interne de l'ouverture cylindrique de sortie des gaz. Il est à noter que dans cette réalisation l'orifice central de la bague érodable pourra au maximum atteindre la même section que celle de la partie médiane de l'orifice de sortie des gaz. Cette réalisation permet ainsi l'emploi de matériaux très facilement érodables puisque l'érosion de la bague est limitée par la structure de l'ouverture de sortie des gaz.

Avantageusement encore, dans cette réalisation, l'opercule obturant initialement l'orifice de sortie des gaz est constitué par une feuille métallique fixée par collage, par soudure ou par brasure contre la surface intérieure de la dite paroi sensiblement plane. Cette feuille métallique pourra être mise sous forme de pièce emnboutie ou filée qui sera maintenue en place dans le sertissage du boîtier sur la bague de fermeture.

Selon un troisième mode préféré de réalisation de l'invention, les compositions pyrotechniques composites préférées pour constituer les chargements pyrotechniques de type "LOVA" sont soit celles à base de liant thermoplastique oxygéné, de nitrate d'ammonium comme charge oxydante et de polymère de l'azoture de glycidyle comme plastifiant et qui sont décrites dans la demande de brevet FR-A-2 713 632, soit celles à base de liant silicone et d'un mélange de perchlorate d'ammonium et de nitrate de sodium telles que décrites dans la demande de brevet FR-A-2 728 562.

Les générateurs selon l'invention de par leur constitution et de par l'emploi de chargements pyrotechniques composites présentent à la fois une très grande fiabilité de conservation dans le temps et une très grande fiabilité de fonctionnement. Par ailleurs les générateurs selon l'invention ne produisent pas ou produisent seulement très peu de résidus solides ; ils ne nécessitent donc pas de systèmes complexes de filtration. Par ailleurs ces générateurs présentent une sensibilité moindre lors des tirs en température élevée, c'est-à-dire des tirs effectués à + 85°C. Les générateurs selon l'invention peuvent être utilisés directement comme générateurs pyrotechniques destinés à gonfler des coussins de protection pour occupants d'un véhicule automobile ou indirectement comme composants pyrotechniques de générateurs plus complexes, par exemple des générateurs dits "hybrides" incorporant une réserve de gaz sous pression.

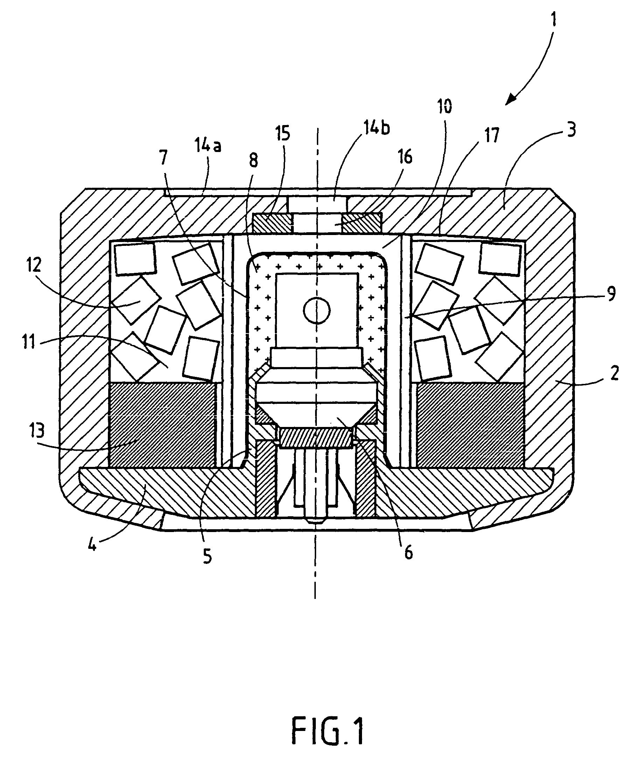

On donne ci-après une description détaillée d'un exemple de réalisation préférée de l'invention en se référant aux figures 1 à 3.

La figure **1** représente, vu en coupe, un générateur selon l'invention.

La figure **2** représente, vu en coupe, le boîtier cylindrique constitutif du corps du générateur représenté à la figure 1.

La figure **3** représente, vu en perspective, l'élément en forme de bague érodable utilisé dans ce générateur.

Le générateur 1 selon l'invention comprend un corps creux 2 constitué par un boîtier cylindrique fermé à l'une de ses extrémités par une paroi 3 sensiblement plane. Une bague de fermeture 4 est sertie dans l'autre extrémité du corps 2. Cette bague de fermeture 4 présente un orifice central prolongé par un col cylindrique creux 5 orienté vers l'intérieur du générateur 1 et dans lequel est serti un inflammateur électrique 6. L'inflammateur 6 est entouré par un capuchon métallique fragmentable 7 contenant une poudre d'allumage d'appoint 8. L'inflammateur 6 constitue avec le capuchon 7 et la poudre 8 le dispositif d'allumage du générateur 1. Une grille métallique ajourée cylindrique 9 enserre le dispositif d'allumage en créant à l'intérieur du générateur une chambre centrale 10 d'allumage et une chambre annulaire 11 de combustion. La chambre annulaire 11 contient un chargement de grains 12 de composition pyrotechnique composite, ces grains étant maintenus par des moyens de calage 13. Ces grains 12 sont des grains cylindriques présentant un ou plusieurs canaux et ayant une épaisseur à brûler, ou "web", comprise entre 0,5mm et 2,5mm. La composition est une composition à base d'acétobutyrate de cellulose comme liant, chargée avec une nitramine. Dans ces conditions, la pression Po mentionnée plus haut est en général comprise entre 15MPa et 30MPa.

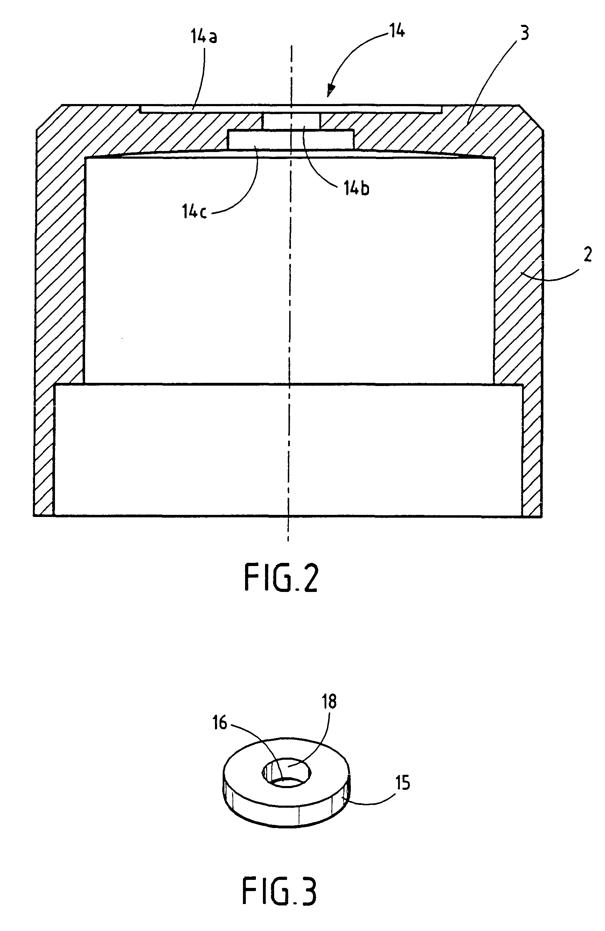

En se reportant plus particulièrement à la figure 2 il peut être observé que la paroi sensiblement plane 3 du générateur comporte une ouverture 14 de sortie de gaz qui est une ouverture cylindrique centrale. Cette ouverture 14 comprend une partie externe 14a de grand diamètre, une partie médiane 14b de petit diamètre et une partie interne 14c de diamètre moyen. Dans la partie interne 14c de diamètre moyen est collé, par exemple avec une colle de type "LOCTITE", un élément érodable 15 en forme de bague cylindrique présentant un orifice cylindrique central 16.

Cette bague érodable est constituée par un polyamide, résultant de la condensation de l'hexaméthylène diamine avec l'acide adipique, chargé à raison de 30% en poids avec des fibres de verre.

Une feuille métallique 17 est fixée par collage contre la surface intérieure de la paroi sensiblement plane 3. Cette feuille 17 constitue un opercule fermant l'orifice 16 présenté par la bague 15. L'épaisseur de cette feuille 17 est déterminée de manière à ce que l'opercule ainsi constitué se rompe lorsque la pression Pc interne au générateur et résultant de l'allumage des grains 12 atteint une valeur prédéterminée supérieure à la pression Po précédemment définie. Le diamètre initial de l'orifice 16 présenté par la bague érodable 15 est par ailleurs calculé pour que la chute instantanée de pression à l'intérieur du générateur 1 au moment de l'ouverture de l'opercule constitué par la feuille 17 soit inférieure à la différence Pc-Po. Ainsi, par construction, le générateur 1 garantit la conservation d'une pression suffisante pour assurer une vitesse de combustion déterminée du chargement pyrotechnique lors de l'allumage et éviter son extinction. En fonctionnement, les gaz chauds quittent le générateur 1 par l'orifice 16 en érodant la paroi 18 de ce dernier. Le diamètre de l'orifice 16 s'agrandit jusqu'à une valeur limite correspondant au diamètre de la partie médiane 14b de l'ouverture 14 de sortie des gaz. Cet accroissement du diamètre de l'orifice 16 en cours de fonctionnement permet d'éviter des surpressions dangereuses en cours de fonctionnement. Pour ce faire il est donc impératif que le diamètre initial de l'orifice 16 soit inférieur au diamètre de la partie médiane 14b de l'ouverture 14 de sortie des gaz.

## Revendications

1. Générateur (1) pyrotechnique de gaz destiné notamment à la sécurité automobile et comportant un corps creux (2) muni d'une ouverture (14) de sortie des gaz, un dispositif d'allumage (6,7,8), et un chargement pyrotechnique (12) constitué principalement par un liant organique et par une charge énergétique, la vitesse de combustion du dit chargement atteignant une valeur minimale prédéterminée lorsque la pression à laquelle il est soumis est supérieure à une valeur Po, **caractérisé en ce que** la dite ouverture (14) est fermée par un dispositif d'évacuation des gaz comportant un élément (15) traversé par un orifice cylindrique (16) fermé par un opercule (17) qui est rompu lorsque la pression intérieure Pc du générateur est supérieure à la dite pression Po, le diamètre initial du dit orifice cylindrique (16) étant calculé pour que la chute instantanée de pression à l'intérieur du générateur lors de l'ouverture du dit opercule (17) soit inférieure à la différence Pc-Po, le dit élément (15) étant constitué par un matériau érodable sous l'action de l'écoulement des gaz de combustion du dit chargement.

2. Générateur selon la revendication 1 **caractérisé en ce que** le dit élément (15) érodable a la forme d'une bague cylindrique présentant un orifice central (16).

3. Générateur selon la revendication 2 **caractérisé en ce que** la dite bague érodable est principalement constituée par une résine choisie dans le groupe constitué par les polyamides, les polyéthers et les polycarbonates.

4. Générateur selon la revendication 3 **caractérisé en ce que** la dite résine est chargée avec des fibres choisies dans le groupe constitué par les fibres de verre et les fibres de carbone.

5. Générateur selon la revendication 2 **caractérisé en ce que** le dit corps creux (2) est constitué par un boîtier cylindrique dont une extrémité est constituée par une paroi sensiblement plane (3) et dont l'autre extrémité est fermée par une bague de fermeture (4) supportant le dispositif d'allumage (6,7,8).

6. Générateur selon la revendication 5 **caractérisé en ce que** la dite ouverture (14) de sortie des gaz est une ouverture cylindrique centrale portée par la paroi (3) sensiblement plane;

7. Générateur selon la revendication 6 **caractérisé en ce que** la dite ouverture (14) présente une partie externe (14a) de grand diamètre, une partie médiane (14b) de petit diamètre, et une partie interne (14c) de diamètre moyen dans laquelle est disposée la bague cylindrique (15) dont l'orifice cylindrique central (16) a un diamètre initial inférieur à celui de la partie médiane (14b) de l'ouverture (14) de sortie des gaz.

8. Générateur selon la revendication 7 **caractérisé en ce que** le dit opercule (17) est constitué par une feuille métallique fixée contre la surface intérieure de la dite paroi sensiblement plane (3).

9. Générateur selon la revendication 8 **caractérise en ce que** le dit chargement pyrotechnique est principalement constitué par un liant thermoplastique oxygéné, par du nitrate d'ammonium et par un polymère de l'azoture de glycidyle.

10. Générateur selon la revendication 8 **caractérisé en ce que** le dit chargement pyrotechnique est principalement constitué par une résine silicone et par un mélange de perchlorate d'ammonium et de nitrate de sodium.

## Claims

1. Pyrotechnic gas generator (1), which is designed in particular for car safety, and comprises a hollow body (2), provided with an aperture (14) for output of the gases, an ignition device (6,7,8), and a pyrotechnical charge (12), consisting mainly of an organic bonding agent and an energy charge, the speed of combustion of the said charge reaching a pre-determined minimum value when the pressure to which it is subjected is greater than a value Po, **characterised in that** the said aperture (14) is closed by a device for discharge of the gases, comprising an element (15), through which there passes a cylindrical opening (16) closed by a cap (17), which is broken when the inner pressure Pc of the generator is greater than the said pressure Po, the initial diameter of the said cylindrical opening (16) being calculated such that the instantaneous drop in pressure inside the generator when the said cap (17) is opened, is less than the difference Pc-Po, the said element (15) consisting of a material which is erodible under the action of the flow of the combustion gases of the said charge.

2. Generator according to claim 1, **characterised in that** the said erodible element (15) is in the form of a cylindrical ring, which has a central opening (16).

3. Generator according to claim 2, **characterised in that** the said erodible ring consists mainly of a resin selected from the group consisting of polyamides, polyethers and polycarbonates.

4. Generator according to claim 3, **characterised in that** the said resin is reinforced with fibres selected from the group consisting of glass fibres and carbon fibres.

5. Generator according to claim 2, **characterised in that** the said hollow body (2) consists of a cylindrical case, one end of which consists of a substantially flat wall (3), and the other end of which is closed by a closure ring (4), which supports the ignition device (6, 7, 8).

6. Generator according to claim 5, **characterised in that** the said aperture (14) for output of the gases is a central cylindrical aperture, which is supported by the substantially flat wall (3).

7. Generator according to claim 6, **characterised in that** the said aperture (14) has an outer part (14a) with a large diameter, a median part (14b) with a small diameter, and an inner part (14c) with an average diameter, in which there is disposed the cylindrical ring (15), the central opening (16) of which has an initial diameter which is smaller than that of the median part (14b) of the aperture (14) for output of the gases.

8. Generator according to claim 7, **characterised in that** the said cap (17) consists of a metal sheet, which is secured against the inner surface of the said substantially flat wall (3).

9. Generator according to claim 8, **characterised in that** the said pyrotechnic charge consists mainly of an oxygenated thermoplastic bonding agent, ammonium nitrate, and a polymer of gycidyl nitride.

10. Generator according to claim 8, **characterised in that** the said pyrotechnic charge consists mainly of a silicon resin, and of a mixture of ammonium perchlorate and sodium nitrate.

## Patentansprüche

1. Pyrotechnischer Gasgenerator (1), insbesondere für die Fahrzeugsicherheit, der einen hohlen Körper (2) mit einer Gasaustrittsöffnung (14), eine Zündvorrichtung (6, 7, 8) und eine pyrotechnische Ladung (12) aufweist, die hauptsächlich aus einem organischen Bindemittel und einem energetischen Material besteht, wobei die Brenngeschwindigkeit der Ladung einen vorbestimmten minimalen Wert erreicht, wenn der Druck, dem sie ausgesetzt ist, höher ist als ein Wert Po, **dadurch gekennzeichnet, daß** die Öffnung (14) von einer Gasauslaßvorrichtung verschlossen wird, die ein Element (15) aufweist, das von einer zylindrischen Öffnung (16) durchquert wird, welche von einer Abdeckfolie (17) verschlossen wird, die zerreißt, wenn der innere Druck Pc des Generators höher ist als der Druck Po, wobei der ursprüngliche Durchmesser der zylindrischen Öffnung (16) so berechnet ist, **daß** der augenblickliche Druckabfall innerhalb des Generators bei der Öffnung der Abdeckfolie (17) geringer ist als die Differenz Pc-Po, wobei das Element (15) aus einem Material besteht, das unter der Wirkung des Ausflusses der Brenngase der Ladung erodierbar ist.

2. Generator nach Anspruch 1, **dadurch gekennzeichnet, daß** das erodierbare Element (15) die Form eines zylindrischen Rings mit einer zentralen Öffnung (16) hat.

3. Generator nach Anspruch 2, **dadurch gekennzeichnet, daß** der erodierbare Ring hauptsächlich aus einem Harz besteht, das aus der Gruppe der Polyamide, Polyether und Polycarbonate ausgewählt wird.

4. Generator nach Anspruch 3, **dadurch gekennzeichnet, daß** das Harz mit Fasern gefüllt ist, die aus der Gruppe der Glasfasern und Kohlenstofffasern ausgewählt wird.

5. Generator nach Anspruch 2, **dadurch gekennzeichnet, daß** der hohle Körper (2) aus einem zylindrischen Gehäuse besteht, dessen eines Ende aus einer im wesentlichen ebenen Wand (3) besteht und dessen anderes Ende von einem Schließring (4) verschlossen wird, der die Zündvorrichtung (6, 7, 8) trägt.

6. Generator nach Anspruch 5, **dadurch gekennzeichnet, daß** die Gasaustrittsöffnung (14) eine zentrale zylindrische Öffnung ist, die von der im wesentlichen ebenen Wand (3) getragen wird.

7. Generator nach Anspruch 6, **dadurch gekennzeichnet, daß** die Öffnung (14) einen Außenbereich (14a) großen Durchmessers, einen Mittelbereich (14b) kleinen Durchmessers und einen Innenbereich (14c) mittleren Durchmessers aufweist, in dem der zylindrische Ring (15) angeordnet ist, dessen zentrale zylindrische Öffnung (16) einen ursprünglichen Durchmesser aufweist, der kleiner ist als der des Mittelbereichs (14b) der Gasaustrittsöffnung (14).

8. Generator nach Anspruch 7, **dadurch gekennzeichnet, daß** die Abdeckfolie (17) aus einer Metallfolie besteht, die gegen die Innenfläche der im wesentlichen ebenen Wand (3) befestigt ist.

9. Generator nach Anspruch 8, **dadurch gekennzeichnet, daß** die pyrotechnische Ladung hauptsächlich aus einem sauerstoffhaltigen thermoplastischen Bindemittel, aus einem Ammoniumnitrat und aus einem Glycidylnitridpolymer besteht.

10. Generator nach Anspruch 8, **dadurch gekennzeichnet, daß** die pyrotechnische Ladung hauptsächlich aus einem Silikonharz und einer Mischung von Ammoniumperchlorat und Natriumnitrat besteht.
